# EUROPEAN PATENT APPLICATION

(11) **EP 1 122 933 A2**
(43) Date of publication of application: **08.08.2001**
(21) Application number: 01300777.8
(22) Date of filing: 30.01.2001
(51) Int. Cl.: H04L 29/12, G06F 17/30

(54) **Transmitting apparatus, receiving apparatus, transmitting-receiving system, transmitting method, and receiving method**

(30) Priority: 31.01.2000 JP 2000022320
(71) Applicant: SONY CORPORATION, Tokyo 141 (JP)
(72) Inventor: Yamagishi, Yasuaki, Intellectual Property Dept., Shinagawa-ku, Tokyo 141 (JP)
(74) Representative: Turner, James Arthur

(57) **Abstract**

A transmitting apparatus for transmitting data is disclosed, that comprises a means for allowing update notification information notifying a receiving side that data that is transmitted has been updated to contain information that identifies an updated data portion.

## Description

The present invention relates to a transmitting apparatus, a receiving apparatus, a transmitting - receiving system, a transmitting method, and a receiving method for transmitting and receiving data, in particular, though not exclusively, those for delivering data to an unspecific number of clients such as many distributed databases.

The applicant of the present invention has proposed a method for structuring a system that provides a service to a unspecific number of clients using a synchronous managing method based on a broadcast protocol for directory servers (referred to as Japanese Patent Application Nos. 10-277352 and 10-2773532). In those related art references, when a part or all of attributes of an entry are updated, the update information is filtered for a predetermined number of container entries at a time.

Depending on the type of an application for a provided service, detailed conditions corresponding to a combination of a class and an attribute of an entry that is updated should be designated so as to filter update information. When the contents of a directory are structured for inquiring genre information or fee information, update information representing that fee information of the contents of a particular genre has changed should be extracted. A directory on the reception side should be selectively updated corresponding to the extracted update information.

Next, such a situation will be practically described. In an environment of which a directory server that has a limited performance and a limited storage capacity as with a home set box is disposed on the receiving side, it may be impossible to obtain all directory update information that is broadcast. In such a situation, it is necessary to selectively obtain update information so as to reduce unnecessary storage cost and message process cost.

As the directory tree that is transmitted becomes large, a process for selecting update information becomes important. However, conventional transmitting systems have not considered such a process.

Various respective aspects and features of the invention are defined in the appended claims.

Embodiments of the present invention can provide a transmitting apparatus, a receiving apparatus, a transmitting - receiving system, a transmitting method, and a receiving method that allow information representing that a particular attribute value of an entry that belongs to a particular class has been updated to be effectively transmitted corresponding to for example a request issued on the receiving side.

A first aspect of the present invention is a transmitting apparatus for transmitting data, comprising a means for allowing update notification information notifying a receiving side that data that is transmitted has been updated to contain information that identifies an updated data portion.

A second aspect of the present invention is a receiving apparatus for receiving data, comprising a means for receiving the data and update notification information notifying the receiving apparatus that the data has been updated and identifying a particular portion of an updated data portion corresponding to the received update notification information.

A third aspect of the present invention is a transmitting - receiving system, comprising a transmitting unit for transmitting data, and a receiving unit for receiving transmitted data, wherein the transmitting unit transmits the data and update notification information notifying a receiving side that the data has been updated, the update notification information containing information identifying an updated data portion, and wherein the receiving unit receives the data and the update notification information and identifies a particular portion of an updated data portion corresponding to the received update notification information.

A fourth aspect of the present invention is a transmitting method for transmitting data, comprising the step of allowing update notification information notifying a receiving side that data that is transmitted has been updated to contain information that identifies an updated data portion.

A fifth aspect of the present invention is a receiving method for receiving data, comprising the step of receiving the data and update notification information notifying the receiving apparatus that the data has been updated and identifying a particular portion of an updated data portion corresponding to the received update notification information.

According to the above-described aspects of the present invention, under a designated condition corresponding to a class and/or attribute of an entry that is updated, update information that is required on the receiving side can be extracted.

The invention will now be described by way of example with reference to the accompanying drawings, throughout which like parts are referred to by like references, and in which:
Fig. 1 is a block diagram showing an example of the structure of a transmitting - receiving system according to the present invention;
Fig. 2 is a block diagram showing the structure of a part of the system shown in Fig. 1;
Fig. 3 is a schematic diagram for explaining a directory tree;
Fig. 4 is a schematic diagram for explaining an entry;
Figs. 5A and 5B are schematic diagrams for explaining an attribute set defined for each class;
Fig. 6 is a flow chart showing an example of a synchronous managing process for a container hierarchical structure;
Fig. 7 is a detailed flow chart showing a part of the process shown in Fig. 6;
Fig. 8 is a detailed flow chart showing another part of the process shown in Fig. 6;
Fig. 9 is a flow chart showing an example of a leaf entry synchronous managing process;
Fig. 10 (drawn as Figures 10A and 10B) is a detailed flow chart showing a part of the process shown in Fig. 9;
Fig. 11 is a detailed flow chart showing another part of the process shown in Fig. 9;
Fig. 12 is a flow chart showing a part of a filter designating process performed on the receiving side;
Fig. 13 is a flow chart showing another part of the process shown in Fig. 12;
Fig. 14 is a schematic diagram showing a real example of an entry class mask schema;
Fig. 15 is a flow chart showing a part of a process for designating an entry class as an object of a filtering process performed on the receiving side;
Fig. 16 is a flow chart showing another part of the process shown in Fig. 15; and
Fig. 17 is a schematic diagram for explaining an effect of the present invention.

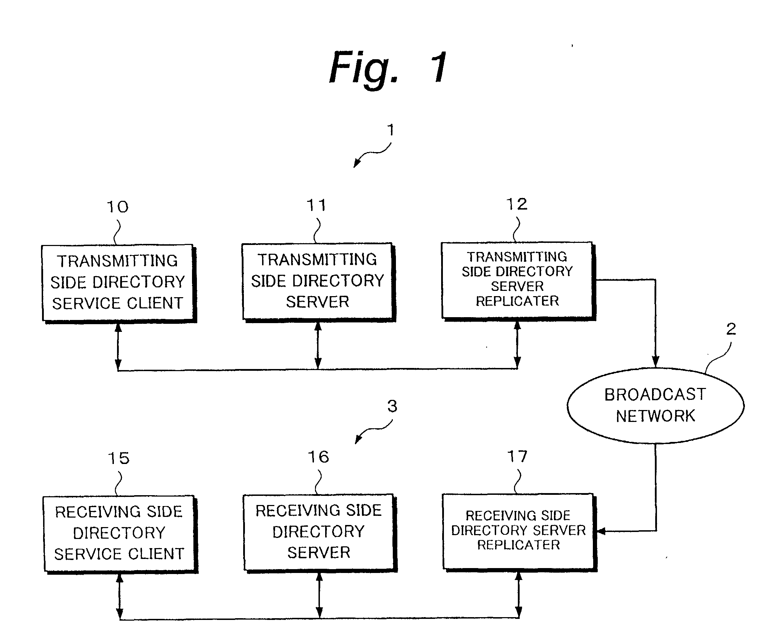

Next, an embodiment of the present invention will be described. Fig. 1 shows an example of the structure of a data transmitting - receiving system according to an embodiment of the present invention. A transmitting side 1 manages many contents on a network (not shown) such as the Internet or a broadcast network in a tree-shaped hierarchical structure. The transmitting side 1 transmits directory information that represents the directory structure to a broadcast network 2.

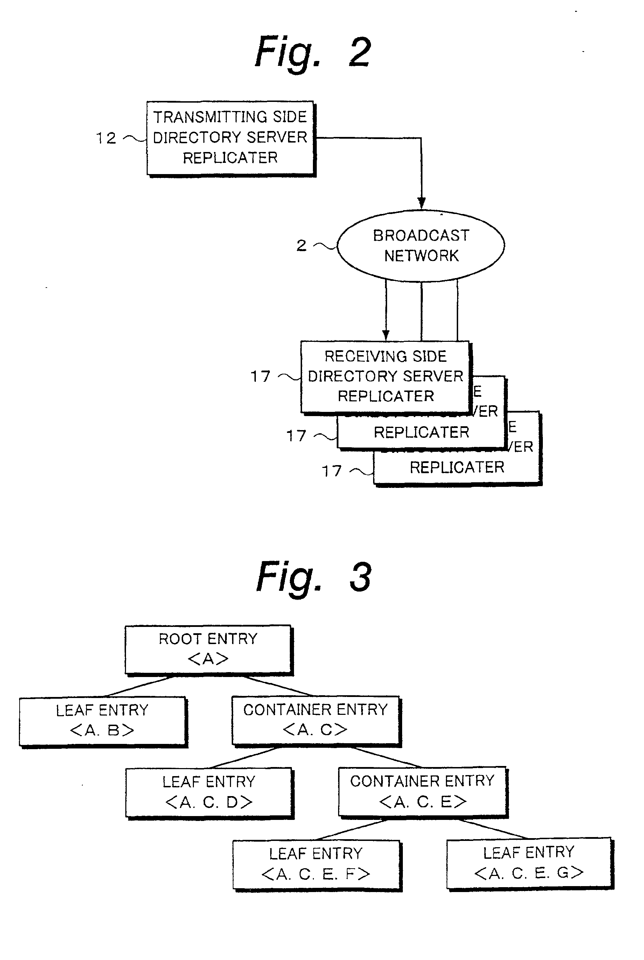

As shown in Fig. 2, on the receiving side 3, many receivers are connected to the broadcast network 2. Each of receivers on the receiving side 3 can receive a broadcast through the broadcast network 2. The receiving side 3 receives directory information that is broadcast through the broadcast network 2, selects desired information from many contents on the broadcast network 2 and other networks, and obtain the selected information.

As shown in Fig. 1, the transmitting side 1 is composed of a transmission side directory service client 10 (hereinafter, referred to as transmitting side client 10), a transmitting side directory server 11 (hereinafter, referred to as transmitting side server 11), and a transmitting side directory server replicater 12 (hereinafter, referred to as transmitting side replicater 12). The transmitting side client 10, the transmitting side server 11, and the transmitting side replicater 12 are mutually connected thorough for example the Internet or a broadcast network and they are mutually communicated.

The transmitting side client 10 is a contents provider that provides contents through for example a network (not shown). The transmitting side client 10 changes and updates the directory structure. The transmitting side client 10 can be disposed at any location of the network. For example, the transmitting side server 11 inquiries the transmitting side client 10 for its contents, changes them, and manages the directory structure. A plurality of transmitting side servers 11 can be distributed on the network. The transmitting side replicater 12 detects a change or the like made in the contents managed by the transmitting side server 11 and structures difference update information (that will be described later) corresponding to the detected result.

The receiving side 3 creates a local directory structure corresponding to the received difference update information. The receiving side 3 is composed of a receiving side directory server replicater 17 (hereinafter, referred to as receiving side replicater 17), a receiving side directory server 16 (hereinafter, referred to as receiving side server 16), and a receiving side directory service client 15 (hereinafter, referred to as receiving side client 15). The receiving side 3 can be for example a personal computer, an STB (Set Top Box), or an IRD (Integrated Receiver Decoder).

The receiving side client 15 is application software, for example, WWW (World Wide Web) browser that can access the directory structure, obtain a plurality of formats of data, and display them. The receiving side server 16 is composed of a local database that stores directory information.

The difference update information transmitted on the broadcast network 2 is received by the receiving side replicater 17. The receiving side replicater 17 updates a database stored in the receiving side server 16 corresponding to the received difference update information and recreates the directory structure. The receiving side client 15 requests the receiving side replicater 17 for required information corresponding to data that is input by the user. Thus, the receiving side replicater 17 searches the database of the receiving side server 16 for the required information and returns an address of the required information to the receiving side client 15. The receiving side client 15 can access information on a network (not shown) corresponding to the information returned from the receiving side replicater 17.

Next, with reference to Fig. 3, the directory structure will be described. The directory is hierarchically structured in a tree shape. Each node of the tree is referred to as entry. Each entry contains information. There are three types of entries that are defined as a root entry, a container entry, and a leaf entry. A container entry is an entry that contains a lower hierarchical entry. Hereinafter, a hierarchy composed of container entries is referred to as container hierarchy.

Entries other than a root entry and a container entry are referred to as leaf entries. A leaf entry is an end node that does not contain a lower hierarchical entry.

The highest hierarchical entry of the directory tree is referred to as root entry. The root entry is an entry that represents the whole world of the directory structure. In the following description, it is assumed that a container entry contains at least one leaf entry or one container entry.

Each entry has a plurality of attributes. Among them, a name that uniquely identifies an entry in the directory tree is referred to as entry name. With an entry name, the location of each entry can be designated in the directory structure. In the example, shown in Fig. 3, the root entry is assigned the entry name A. A leaf entry as an immediately lower hierarchical entry of the root entry is assigned the entry name A.B. A container entry as an immediately lower hierarchical entry of the root entry is assigned the entry name A.C. Likewise, each entry in the hierarchical structure is assigned a unique entry name that represents the path to the root entry and that is delimited by periods.

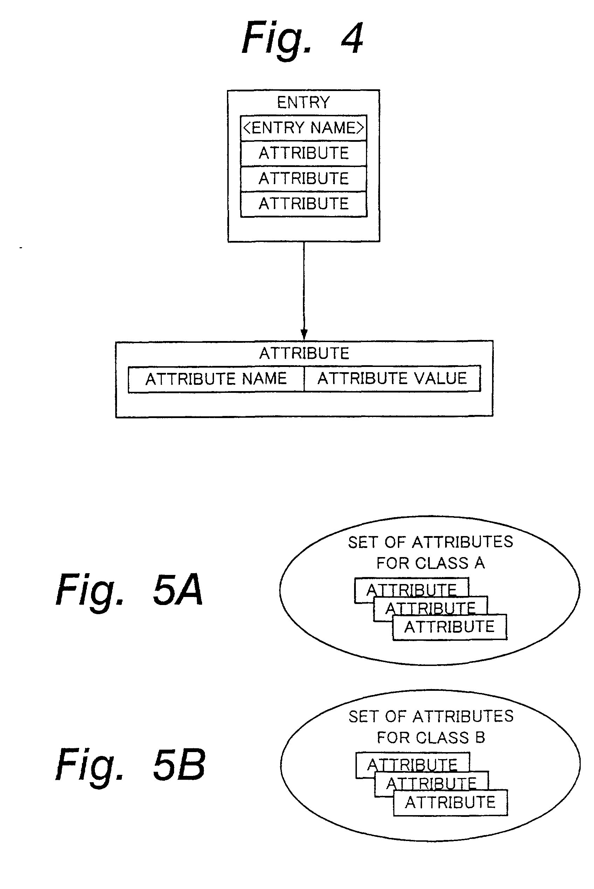

Next, with reference to Fig. 4, the structure of an entry will be described. As was described above, each entry has a plurality of attributes. Among them, an attribute that represents the name of an entry uniquely identified in the directory tree is referred to as entry name. Each attribute is composed of a set of an attribute name and an attribute value. Each entry belongs to a particular class. As shown in Figs. 5A and 5B, each class defines a set of particular attributes. Examples of classes are classes for video information and audio information.

In this example, a class is an abstractive representation of a collection of objects that have the same characteristic. An object is a "substance" that exists in the real world. An example of an object is a book object "King Lear" written by Shakespeare. Another example of an object is a book object "I am a cat" written by Soseki Natsume. When the two book objects are abstractively represented, a class "book" can be defined. In the "book" class, an attribute name "title" and an attribute name "writer" can be defined.

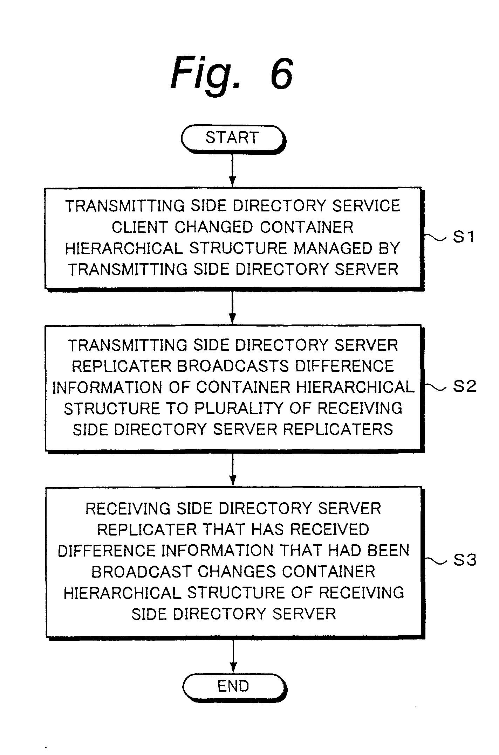

Next, a synchronous managing method for synchronizing directory information stored in the transmitting side server 11 on the transmitting side 1 with directory information stored in the receiving side server 16 on the receiving side 3 will be described. First of all, with reference to Fig. 6, the synchronous managing process of the hierarchical structure of container entries will be described. At step S1, the transmitting side client 10 changes the container hierarchical structure managed by the transmitting side server 11. For example, the transmitting side client 10 performs a changing process for adding a new container entry or a leaf entry as an immediately lower hierarchical entry of a particular container entry. Alternatively, the transmitting side client 10 performs another changing process for deleting a container entry or a leaf entry as an immediately lower hierarchical entry of a particular container entry.

At step S2, the transmitting side replicater 12 detects a change of the contents managed by the transmitting side server 11 and generates container structure update information (hereinafter, referred to as Msg. 1) corresponding to the detected result. The generated Msg. 1 is broadcast to the broadcast network 2. The Msg. 1 is cyclically broadcast a predetermined number of times.

At step S3, the Msg. 1 that has been broadcast at step S2 is received by the receiving side replicater 17. At step S3, the container hierarchical structure managed corresponding to the directory information stored in the receiving side server 16 is changed corresponding to the received Msg. 1. As a result, the container hierarchical structure of the directory information is synchronized between the transmitting side 1 and the receiving side 3.

The format of the Msg. 1 is for example as follows:

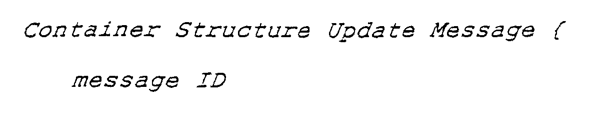

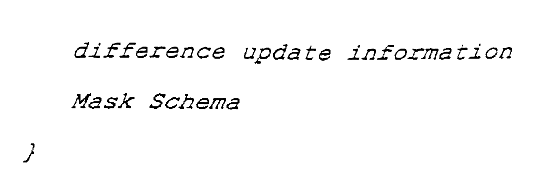

The "message ID" is identification information of the Msg. 1. For example, the "message ID" is an integer that is incremented whenever the Msg. 1 is generated. The "difference update information" is information that represents the content of a change of the container hierarchical structure. The "mask schema" is mask information necessary for the receiving side 3 to selectively receive the Msg. 1 that is broadcast.

The "mask schema" is defined for example as follows:

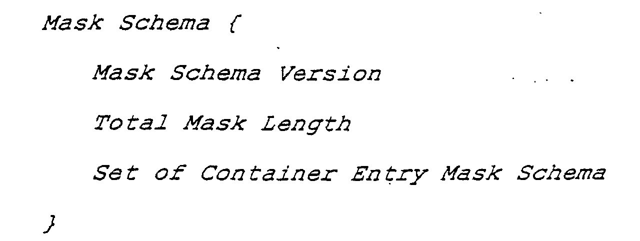

The "mask schema version" is similar to the "message ID". The "total mask length" represents the total length of the mask values of the entire container entry hierarchy in the unit of bits or bytes. The mask value is a value of for example three bits assigned to each mask as will be described later. The "set of container entry mask schema" is a container entry mask schema that represents a mask corresponding to each container entry.

The "container entry mask schema" is defined for example as follows.

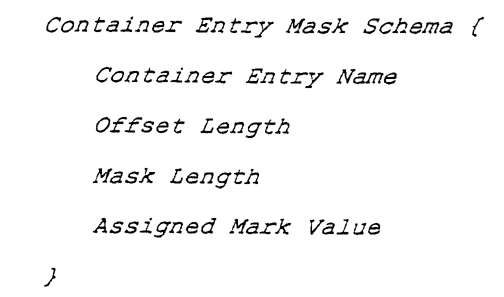

The "container entry name" is a character string as a container entry name. The "offset length" is an offset of a mask value that represents a mask corresponding to the relevant container entry against the first bit position or the first byte position of all the mask values. The "mask length" represents the length of a mask in the unit of bits or bytes. The "assigned mask value" is a bit (byte) string assigned as a mask value.

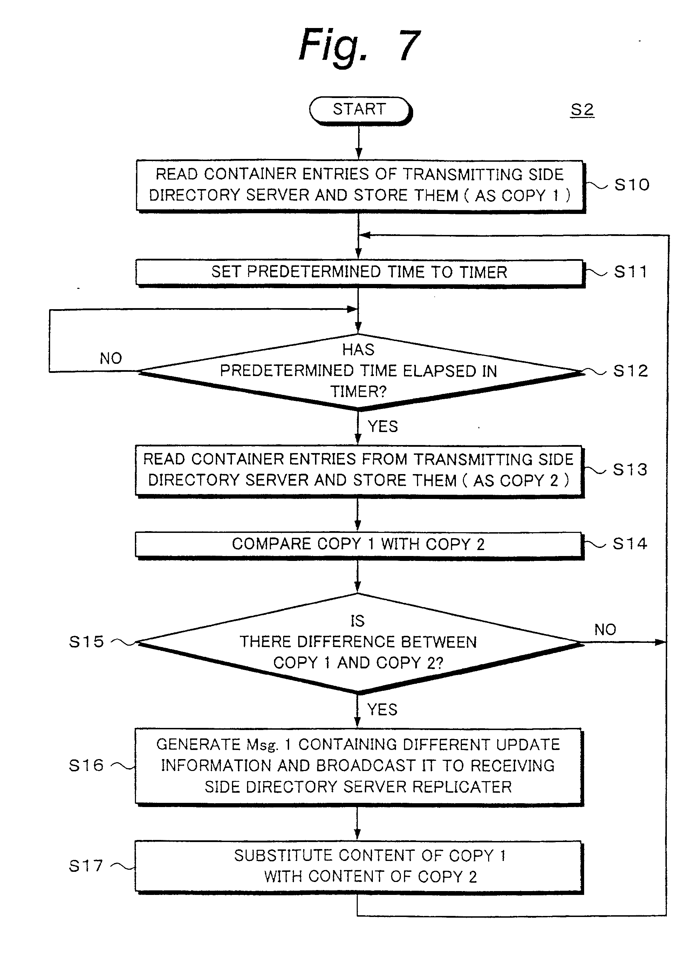

Next, with reference to Fig. 7, the process performed at step S2 will be described in detail. Each step of the process shown in Fig. 7 is performed by the transmitting side replicater 12. At step S10, the transmitting side replicater 12 reads information of the container entry hierarchy managed by the transmitting side server 11 and stores the read information as a copy 1. The copy 1 is stored to a record medium or a storage medium such as a memory or a hard disk of the transmitting side replicater 12. At step S11, predetermined time is set to a timer and then the timer is started.

At step S12, it is determined whether or not the predetermined time has elapsed. When the determined result at step S12 is Yes (namely, the predetermined time has elapsed), the flow advances to step S13. Otherwise, the flow returns to step S12. At step S13, the information of the container entry hierarchy stored in the transmitting side server 11 is read and stored as a copy 2. The copy 2 is stored to a record medium or a storage medium such as a memory or a hard disk of the transmitting side replicater 12.

At step S14, the content of the copy 1 is compared with the content of the copy 2. At step S15, a process corresponding to the compared result is performed. In other words, when the determined result at step S15 is Yes (namely, there is a difference between the content of the copy 1 and the content of the copy 2), the flow advances to step S16. Otherwise, the flow returns to step S11. At step S16, a Msg. 1 that is difference update information between the copy 1 and the copy 2 is generated. The generated Msg. 1 is broadcast to the receiving side replicater 17 through the broadcast network 2. At step S17, the content of the copy 1 is substituted with the content of the copy 2. Thereafter, the flow returns to step S11.

In such a process, it is determined whether or not the hierarchical relation of container entries is changed at intervals of a predetermined time period. When a change of the hierarchical relation of container entries is detected, the Msg. 1 is generated corresponding to the detected result and then the generated Msg. 1 is broadcast.

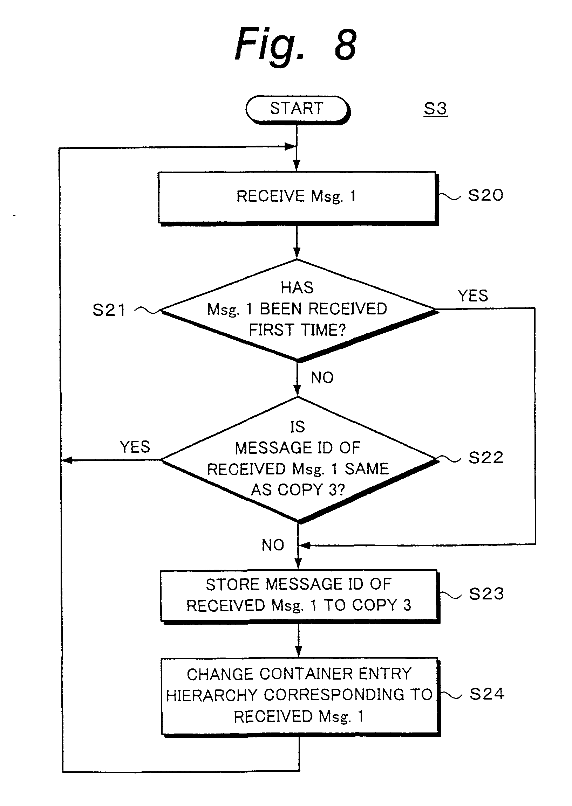

Next, with reference to Fig. 8, the process performed at step S3 shown in Fig. 6 will be described in detail. Each step shown in Fig. 8 is performed by the receiving side replicater 17. At step S20, the transmitting side replicater 12 receives the Msg. 1 that has been broadcast from the transmitting side replicater 12 through the broadcast network 2. At step S21, it is determined whether or not the Msg. 1 has been received first time. When the determined result at step S21 is Yes (namely, the Msg. 1 has been received first time), the flow advances to step S23. Otherwise, the flow advances to step S22.

At step S23, the message ID of the Msg. 1 received at step S20 is stored as a copy 3 to a record medium or a storage medium such as a memory or a hard disk of the receiving side replicater 17. At step S24, corresponding to the difference update information contained in the Msg. 1 received at step S20, the directory information managed by the receiving side server 16 is updated. As a result, the structure of the container hierarchy represented by the directory information is updated. Thereafter, the flow returns to step S20.

On the other hand, at step S22, it is determined whether or not the message ID of the Msg. 1 received at step S20 is the same as the copy 3. When the determined result at step S20 is Yes (namely, the message ID of the Msg. 1 is the same as the copy 3), the flow returns to step S20. Otherwise, the flow advances to step S23.

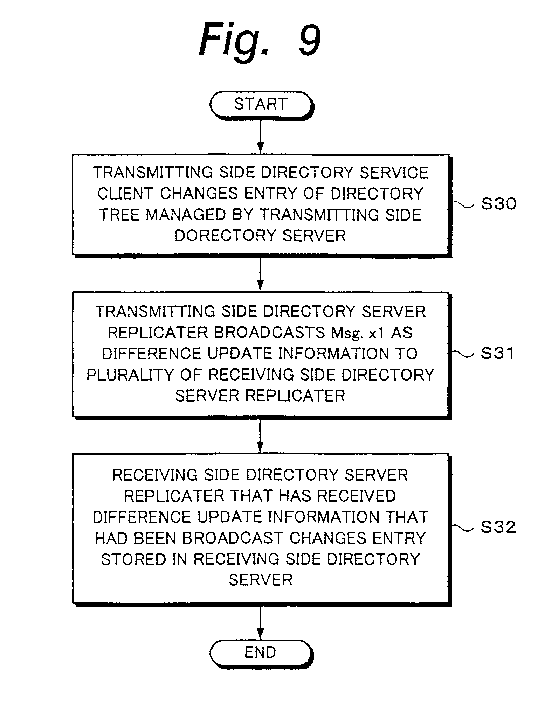

Next, with reference to Fig. 9, a synchronous managing method for leaf entries will be described. At step S30, the transmitting side client 10 updates leaf entries as immediately lower hierarchical entries of a particular container entry in the directory structure managed by the transmitting side server 11. For example, the transmitting side client 10 adds a new leaf entry as an immediately lower hierarchical entry of a particular container entry. Alternatively, the transmitting side client 10 deletes or modifies a leaf entry as an immediately lower hierarchical entry of a particular container entry.

At step S31, the transmitting side replicater 12 detects a change of a leaf entry as an immediately lower hierarchical entry of a particular container entry. Corresponding to the detected result, the transmitting side replicater 12 generates leaf entry update information (hereinafter, referred to as Msg. x1) representing that a leaf entry as an immediately lower hierarchical entry of a particular container entry has been updated. The Msg. x1 will be described later. The transmitting side replicater 12 cyclically broadcasts the generated Msg. x1 to a plurality of receiving side replicaters 17 through the broadcast network 2.

At step S32, the receiving side replicater 17 receives the Msg. x1 that has been broadcast. The receiving side replicater 17 changes a relevant leaf entry managed as directory information stored in the receiving side server 16 corresponding to the received Msg. x1. Thus, leaf entries as directory information are synchronized between the transmitting side 1 and the receiving side 3.

The format of the Msg. x1 is for example as follows.

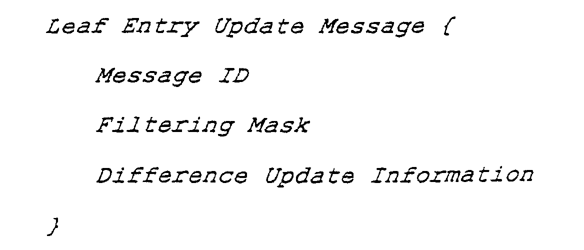

The "message ID" is identification information of the Msg. x1. The "message ID" is for example an integer that is incremented by 1 whenever the Msg. x1 is newly generated. The "filtering mask" is information necessary for the receiving side 3 to selectively receive the Msg. x1 that is broadcast. The "difference update information" is information representing that a leaf entry has been updated.

The structure of the filtering mask is defined for example as follows:

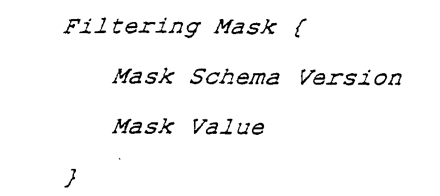

The "mask schema version" is similar to the message ID. The "mask value" is a bit string or a byte string of a mask. The structure of the "mask value" is defined by a mask schema corresponding to the "mask schema version". The "filtering mask" is used for a filtering process so that the receiving side 3 effectively selects information from many massages Msg. xl that are broadcast.

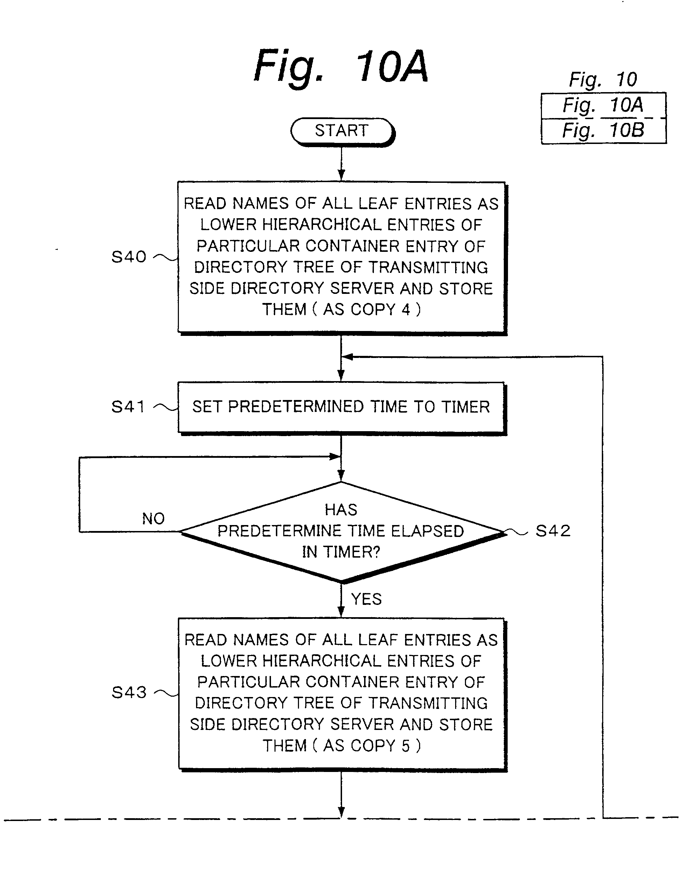

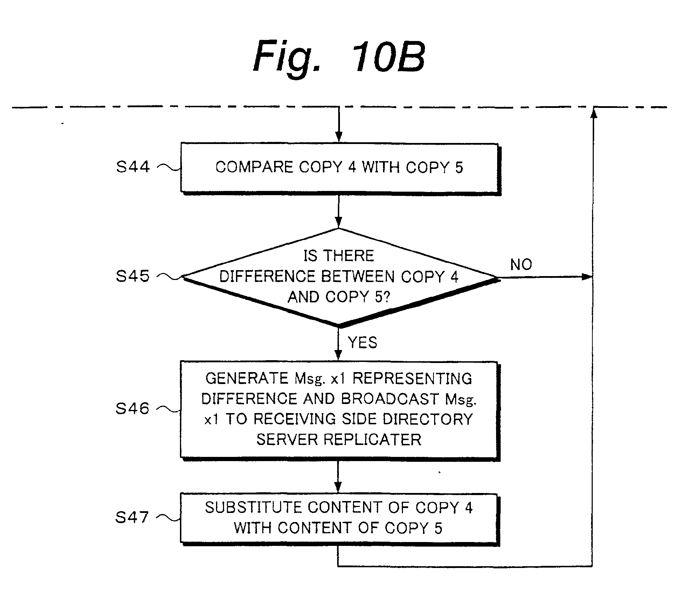

Next, with reference to Fig. 10, the process performed at step S31 will be described in detail. Each step of the process shown in Fig. 10 is performed by the transmitting side replicater 12. At step S40, the names of all leaf entries as lower hierarchical entries of a particular container entry are read. The names of the leaf entries that have been read are stored as a copy 4 to a record medium or a storage medium such as a memory or a hard disk of the transmitting side replicater 12.

At step S41, predetermined time is set to a timer. At step S42, it is determined whether or not the predetermine time has elapsed in the timer. When the determined result at step S42 is Yes (the predetermined time has elapsed), the flow advances to step S43. Otherwise, the flow returns to step S42. At step S43, the names of all leaf entries as lower hierarchical entries of a particular container entry of the transmitting side server 11 are read. The read hierarchical relation is stored as a copy 5. The copy 5 is stored to a record medium or a storage medium such as a memory or a hard disk of the transmitting side replicater 12.

At step S44, the content of the copy 4 is compared with the content of the copy 5. At step S45, it is determined whether or not there is a difference between the content of the copy 4 and the content of the copy 5. When the determined result at step S45 is Yes (namely, there is a difference between the content of the copy 4 and the content of the copy 5), the flow advances to step S46. Otherwise, the flow returns to step S41. At step S46, an Msg. x1 as difference update information representing the difference between the copy 4 and the copy 5 is generated. The generated Msg. x1 is broadcast to the receiving side replicater 17 through the broadcast network 2. Thereafter, the flow advances to step S47. At step S47, the content of the copy 4 is substituted with the content of the copy 5. Thereafter, the flow returns to step S40.

The process shown in Fig. 10 is performed by the transmitting side replicater 12 for all container entries of the directory structure managed by the transmitting side server 11.

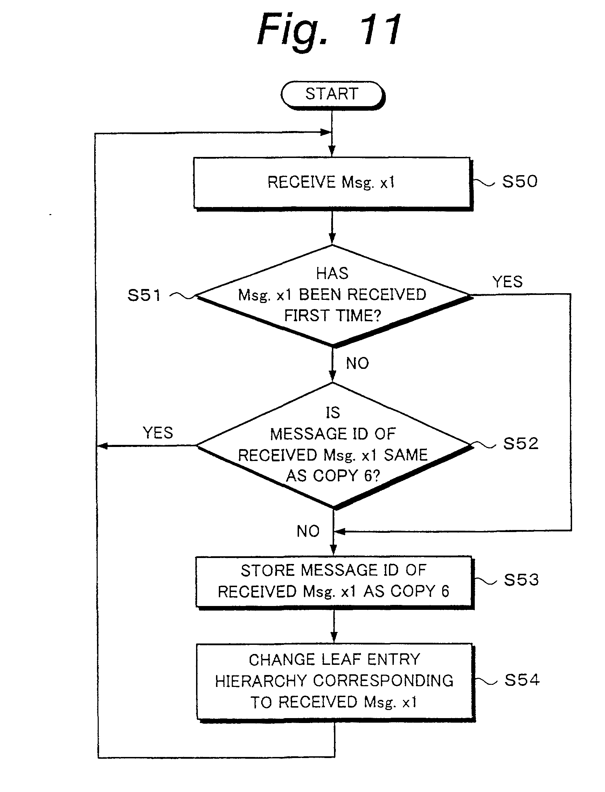

Next, with reference to Fig. 11, the process performed at step S32 shown in Fig. 9 will be described in detail. Each step of the process shown in Fig. 11 is performed by the receiving side replicater 17. At step S50, an Msg. x1 that has been broadcast by the transmitting side replicater 12 through the broadcast network 2 is received. At step S51, it is determined whether or not the Msg. x1 has been received first time. When the determined result at step S51 is Yes (namely, the Msg. x1 has been received first time), the flow advances to step S53. Otherwise, the flow advances to step S52.

At step S53, the message ID of the Msg. x1 received at step S50 is stored as a copy 6. The copy 6 is stored to a record medium or a storage medium such as a memory or a hard disk of the receiving side replicater 17. At step S54, directory information managed by the receiving side server 16 is updated corresponding to the difference update information contained in the Msg. x1 received at step S50. Leaf entries represented by the directory information are updated. Thereafter, the flow returns to step S50.

At step S52, it is determined whether or not the message ID of the Msg. x1 received at step S50 is the same as the copy 6. When the determined result at step S52 is Yes (namely, the message ID of the Msg. x1 is the same as the copy 6), the flow returns to step S50. Otherwise, the flow advances to step S53.

Next, a filter designating process performed on the receiving side will be described. Before performing a filtering process, the receiving side replicater 17 should designate a portion of the container entry hierarchy. To do that, the receiving side replicater 17 performs a process for generating a target mask list (namely, data as a list of filtering masks corresponding to a portion of the container entry hierarchy required by the receiving side client 15). In addition, the receiving side replicater 17 performs a process for selectively receiving container structure update information Msg. 1' containing filtering masks in the target mask list (the container structure update information Msg. 1' will be described later).

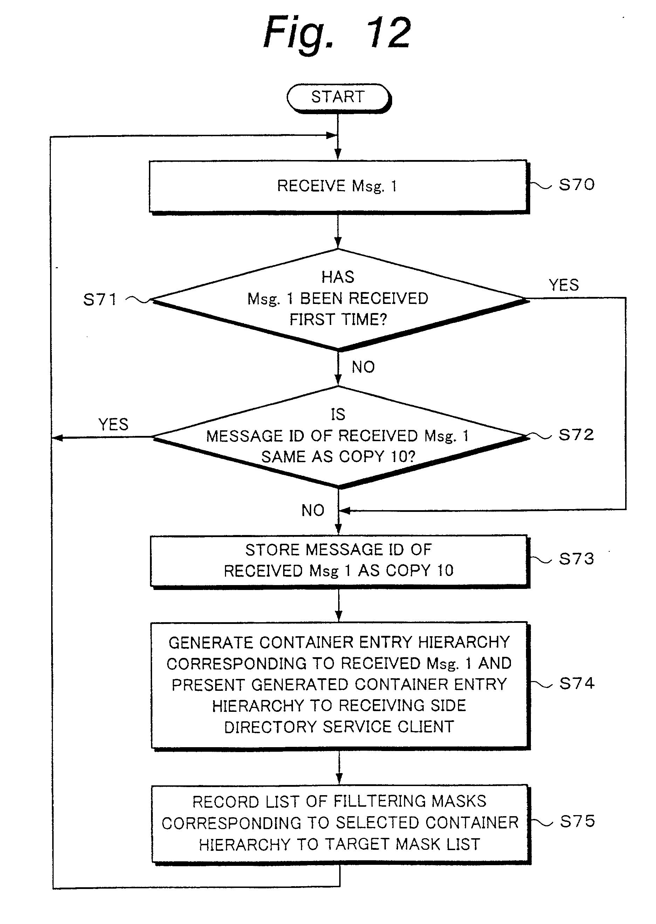

Next, with reference to Fig. 12, the process for generating a target mask list will be described. Each step of the process shown in Fig. 12 is performed by the receiving side replicater 17. At step S70, container structure update information Msg. 1 is received. At step S71, it is determined whether or not the Msg. 1 has been received first time. When the determined result at step S71 is Yes (namely, the Msg. 1 has been received first time), the flow advances to step S73. Otherwise, the flow advances to step S72.

At step S73, the message ID of the Msg. 1 received at step S70 is stored to a record medium or a storage medium such as a memory or a hard disk of the receiving side replicater 17. At step S74, corresponding to the content of the container structure update information Msg. 1 received at step S70, a container entry hierarchy is generated. The generated container entry hierarchy is presented to the receiving side client 15 so as to prompt the user or the like for selecting a desired portion thereof. For example, the receiving side client 15 displays information of the supplied container entry hierarchy on a predetermined displaying portion. The user or the like selects a desired portion of the container entry hierarchy. Information representing the selected container entry hierarchy is supplied from the receiving side client 15 to the receiving side replicater 17.

At step S75, filtering masks corresponding to the container entry hierarchy selected at step S74 are designated. A list of designated filtering masks is stored as a target mask list to a record medium or a storage medium such as a memory or a hard disk of the receiving side replicater 17. Thereafter, the flow returns to step S70.

At step S72, it is determined whether or not the message ID of the Msg. 1 received at step S70 is the same as the copy 10. When the determined result at step S72 is Yes (namely, the message ID of the Msg. 1 is the same as the copy 10), the flow returns to step S70. Otherwise, the flow advances to step S73.

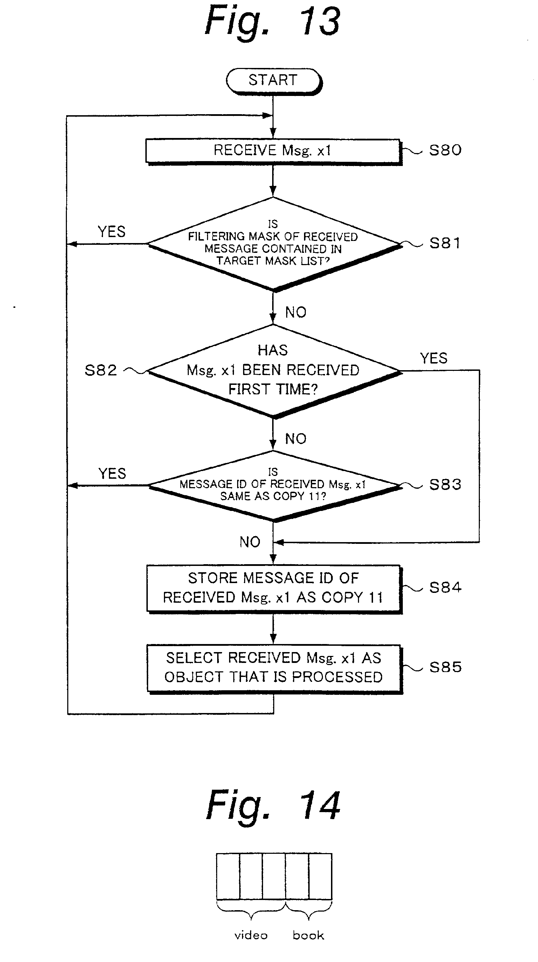

Next, with reference to Fig. 13, the process for selectively receiving leaf update information Msg. x1' through the broadcast network 2 will be described. Each step of the process shown in Fig. 13 is performed by the receiving side replicater 17. At step S80, the leaf update information Msg. x1 is received. At step S81, it is determined whether or not a filtering mask of the Msg. x1 received at step S80 is contained in the target mask list. When the determined result at step S81 is Yes (namely, a filtering mask of the Msg. x1 is contained in the target mask list), the flow returns to step S80. Otherwise, the flow advances to step S82.

At step S82, it is determined whether or not the Msg. x1 has been received first time. When the determined result at step S82 is Yes (namely, the Msg. x1 has been received first time), the flow advances to step S84. Otherwise, the flow advances to step S83. At step S84, the message ID of the Msg. x1 received at step S80 is stored as a copy 11. At step S85, the Msg. x1 received at step S80 is selected as an object that is processed. In other words, the Msg. x1 is selected as an Msg. x1'. Thereafter, the flow returns to step S80.

At step S83, it is determined whether or not the message ID of the Msg. x1 received at step S80 is the same as the copy 11. When the determined result at step S83 is Yes (namely, the message ID of the Msg. x1 is the same as the copy 11), the flow advances to step S80. Otherwise, the flow advances to step S84.

According to the embodiment of the present invention, an entry class mask schema is used so as to filter update information of an entry corresponding to a class to which the entry belongs and attributes defined in the class. The entry class master schema is defined for example as follows:

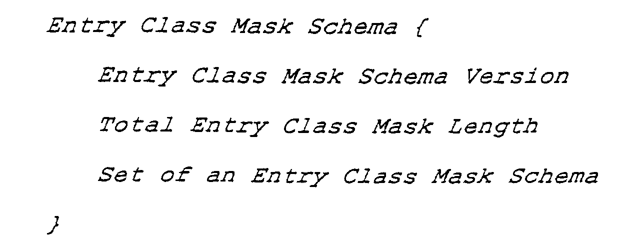

The "entry class mask schema version" is an integer that is incremented by for example 1 whenever an entry class mask schema is generated (namely, an entry class is generated). The "total entry class mask length" represents the length of all mask values in the unit of bits or bytes. The "set of an entry class mask schema" is an array of entry class mask schemas that are entry class mask schema information corresponding to individual classes.

The "an entry class mask schema" is defined for example as follows.

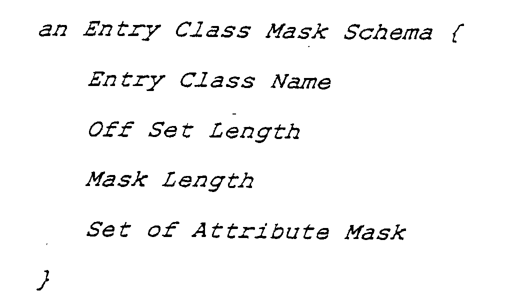

The "entry class name" is a character string representing the name of an entry class. The "off set length" represents an offset from the first bit (byte) position of. the total class mask length corresponding to the entry class in the unit of bits or bytes. The "mask length" represents the length of a mask in the unit of bits or bytes. The "set of attribute mask" is an array of attribute masks.

An attribute mask is defined for example as follows:

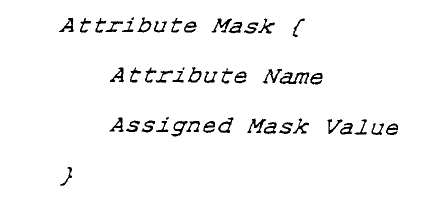

The "attribute name" is a character string representing an attribute name. The "assigned mask value" is a bit (byte) string assigned to the attribute.

Next, a real example of an entry class mask schema will be described. An example of a class is a video contents class. Examples of attribute names of the video contents class are a "title", a "rental fee", and a "shop ID list". These attribute names "title", "rental fee", and "shop ID list" are assigned for example "001", "010", and "100", respectively. Thus, the mask length is three bits.

Next, an example of an entry class mask schema will be described. In the following, a comment is described in parentheses "( )". In a real entry class mask schema, a comment can be omitted.

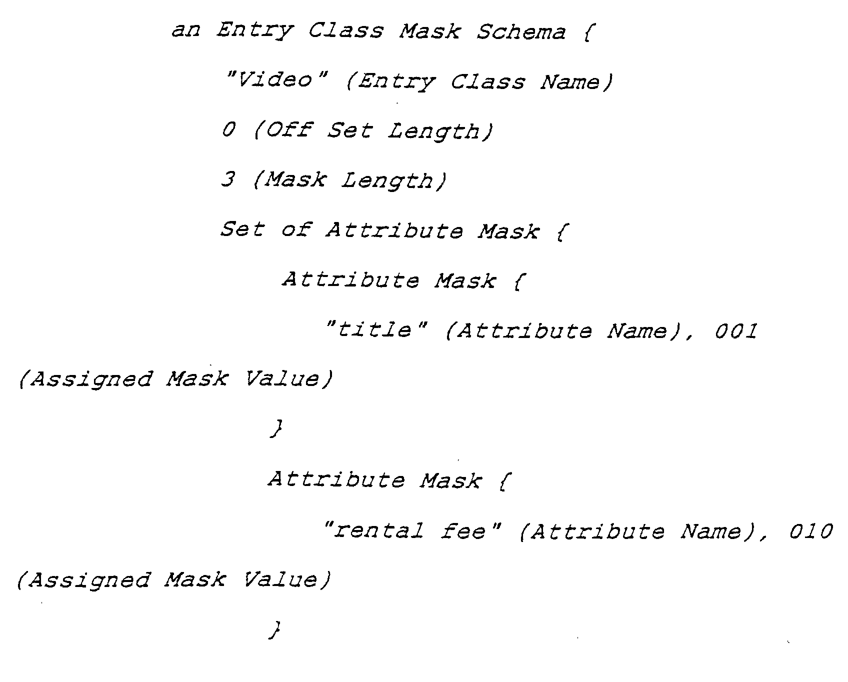

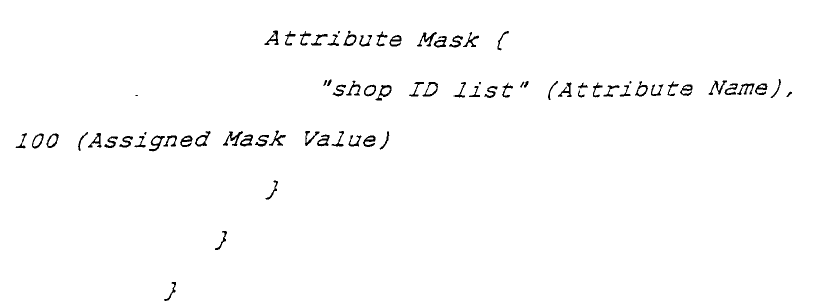

Another example of a class is a book contents class. Examples of attribute names of the book contents class are a "title" and a "retail price". These attribute names are assigned respective bit strings as assigned mask values. For example, "01" and "10" are assigned to "title" and "retail price", respectively. Thus, the mask length is 2 bits.

An example of an entry class mask schema is as follows. A comment is described in parentheses "( )". In a real entry class mask schema, a comment can be omitted.

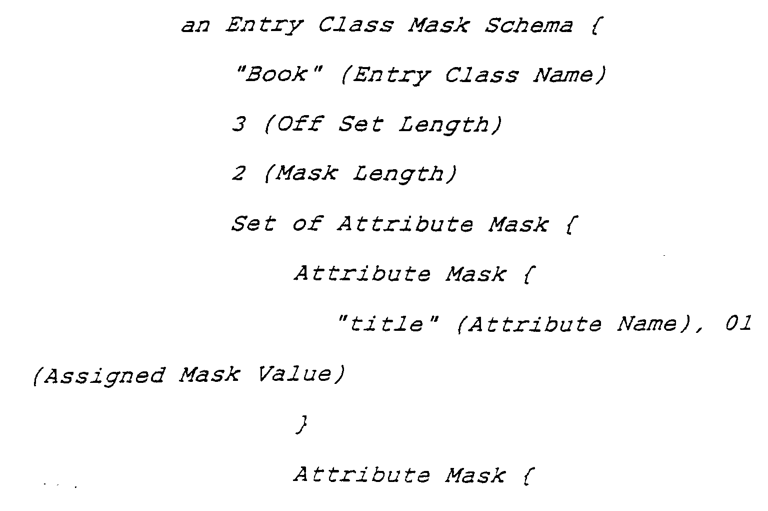

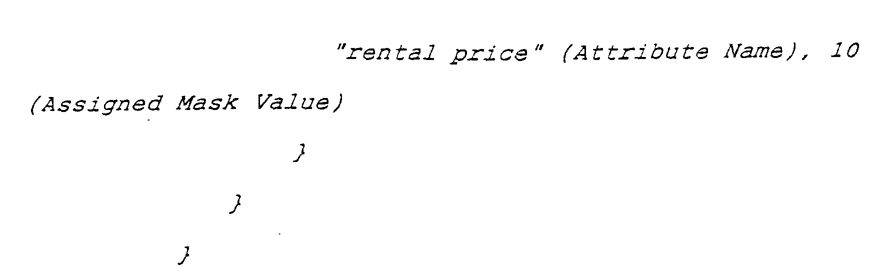

Next, an example of an entry class mask schema containing masks for the above-described video entry class and book entry class is as follows. A comment is described in parentheses "( )". In a real entry class mask schema, a comment can be omitted.

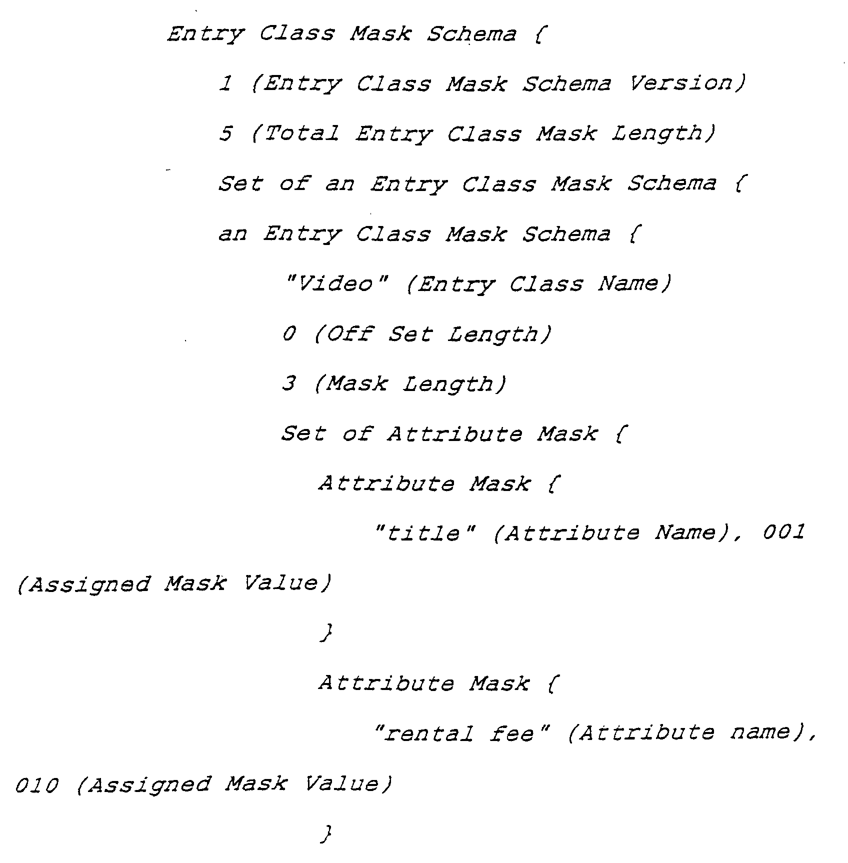

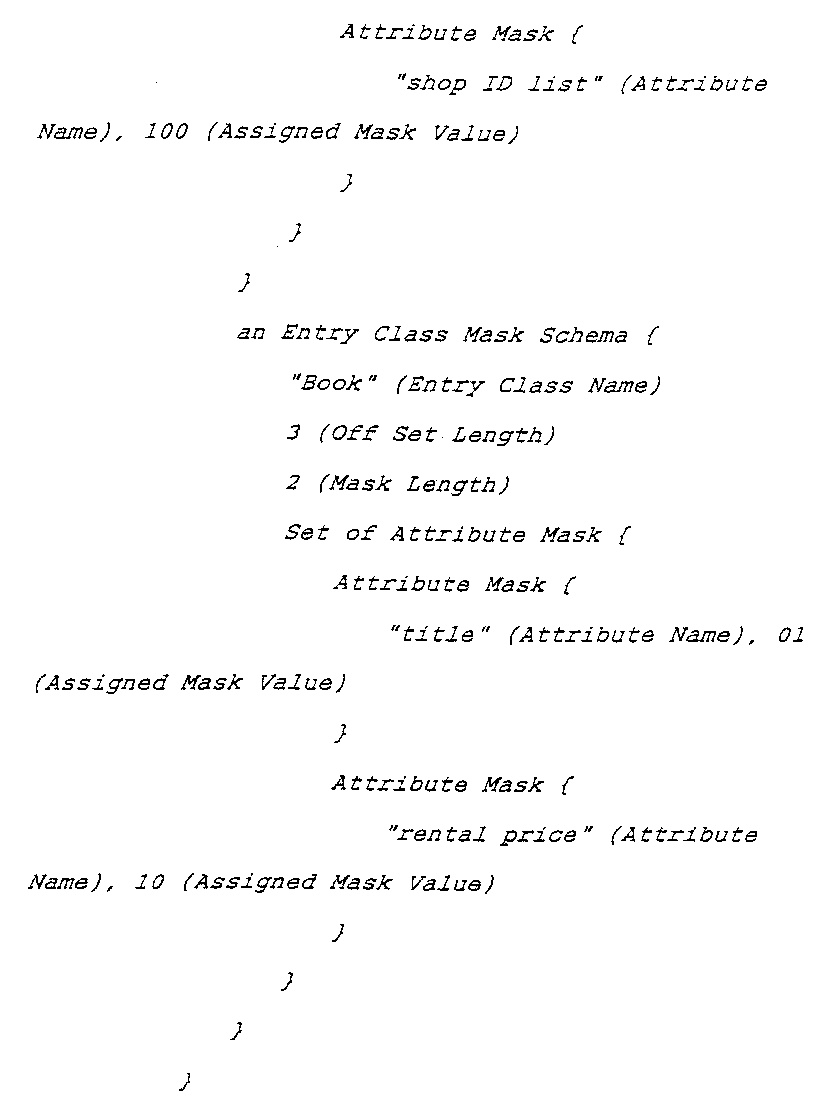

In the above-described entry class mask schema, the total entry class mask length is 5. The off set lengths of the entry class mask schemas for "video" and "book" are 0 (bit) and 3 (bits), respectively. Thus, as shown in Fig. 14, a mask bit string of 3 bits for "video" and a mask bit string of 2 bits for "book" are described (namely, a total of 5 bits).

Next, a notifying process for notifying the receiving side of a generated entry class mask schema will be described. When a new entry class is defined in the transmitting side server 11 and the receiving side server 16, the transmitting side replicater 12 notifies a plurality of receiving side replicaters 17 of an entry class mask schema update message (hereinafter, referred to as Msg. y1) through the broadcast network 2. The Msg. y1 contains an entry class mask schema. At that point, the entry class is defined by the transmitting side server 11 and the receiving side server 16 at the same time.

The Msg. y1 is defined for example as follows.

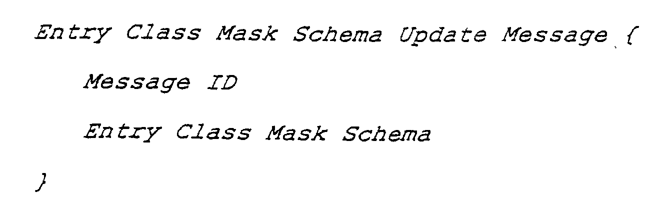

The "message ID" is an integer that is incremented by for example 1 whenever the Msg. y1 is generated. The "entry class mask schema" contains the above-described entry class mask schema.

Next, selections of an entry class and attributes thereof used in the filtering process performed on the receiving side will be described. When the receiving side replicater 17 receives the Msg. yl, the receiving side replicater 17 performs a filtering process for entry difference update information corresponding to the received Msg. y1. Before performing the filtering process, the receiving side client 15 should designate an entry class for the filtering process.

Such an entry class can be designated when a filtering region of a container hierarchy is designated. In other words, a product of a condition for an entry class and a condition for a filtering region of the container hierarchy may be used as a filtering condition. Alternatively, a condition for an entry class and a condition for a filtering region of the container hierarchy may be separately designated.

The receiving side replicater 17 performs a process for generating a target entry class mask list. In addition, the receiving side replicater 17 performs a process for selectively receiving an entry class filtering mask contained in the generated target entry class mask list through the broadcast network 2.

An entry class filtering mask is a filtering mask corresponding to a container entry class required by the receiving side client 15. A container entry class required by the receiving side client 15 can be considered as a container entry class that is accessed many times. A target entry class mask list is data of a list of entry class filtering masks.

Leaf update information Msg. x1' is defined for example as follows. As was described above, the Msg. x1' contains an entry class filtering mask as a filtering mask.

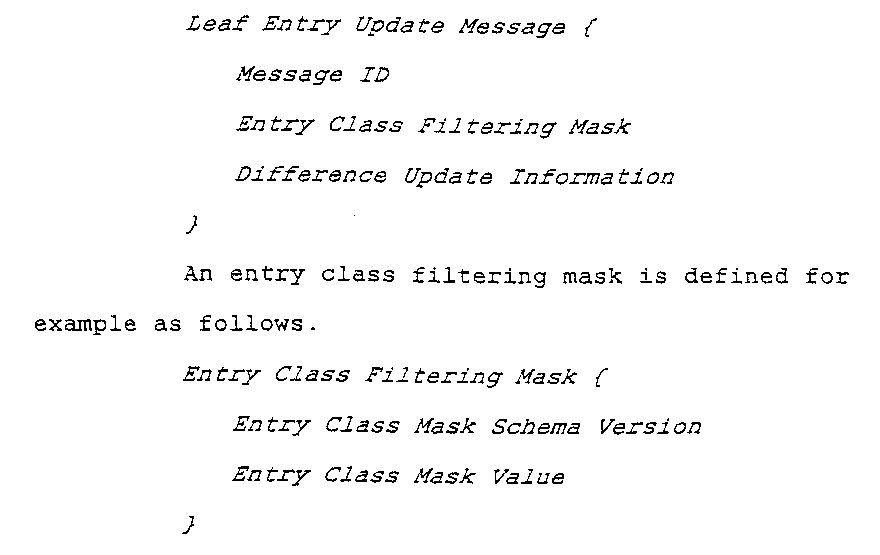

The "entry class mask value" is a bit string or a byte string of an entry class mask. The structure of the "entry class mask value" is defined by an entry class mask schema corresponding to the "entry class mask schema version".

An example of a target entry class mask list is as follows. It is based on a real example of the above-described entry class mask schema (see Fig. 14).

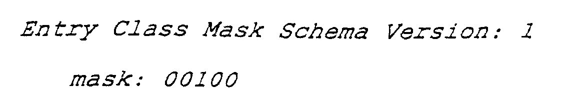

As is clear from Fig. 14, a mask "00100" is used when the receiving side is interested in only an update of a video title. Likewise, a mask "00010" is used when the receiving side is interested in only an update of a retail price.

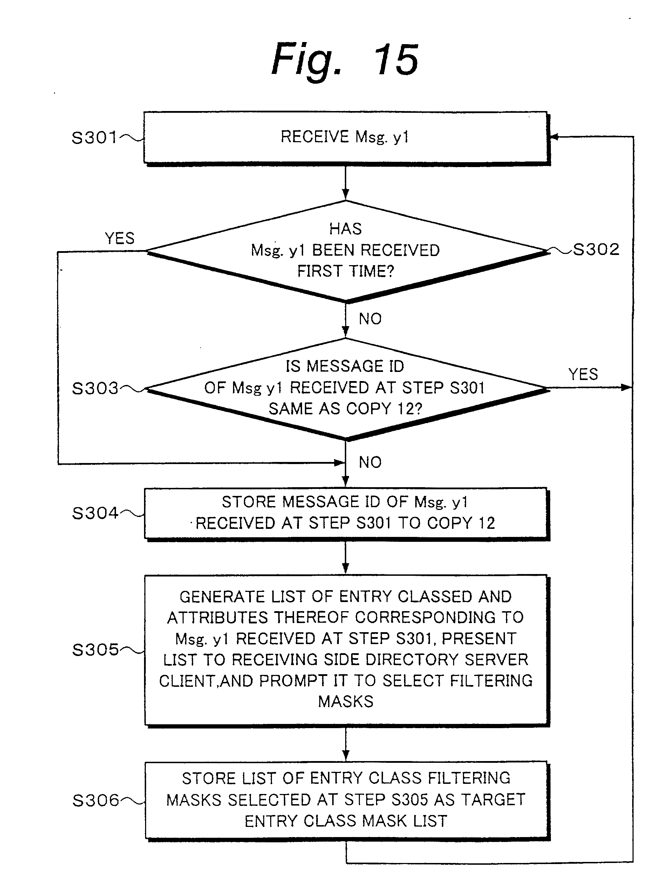

Next, with reference to Fig. 15, a process for storing a target entry class mask list will be described. At step S301, an Msg. y1 is received. At step S302, it is determined whether or not the Msg. y1 has been received first time. When the determined result at step S302 is Yes (namely, the Msg. y1 has been received first time), the flow advances to step S304. Otherwise, the flow advances to step S303.

At step S304, the message ID of the Msg. y1 received at step S301 is stored as a copy 12. The copy 12 is stored to a record medium or a storage medium such as a memory or a hard disk of the receiving side replicater 17. At step S305, a list of entry classes and attributes thereof is generated corresponding to the Msg. y1 received at step S301. The list is presented to the receiving side client 15 so as to prompt the user to select desired entry classes and attributes.

At step S306, a list of entry filtering masks selected at step S305 is stored as a target entry class mask list. The target entry class mask list is data of a list of entry class filtering masks of container entries required by the receiving side client 15. The target entry class mask list is stored to a record medium or a storage medium such as a memory or a hard disk of the receiving side replicater 17.

At step S303, it is determined whether or not the message ID of the Msg. y1 received at step S301 is the same as the copy 12. When the determined result at step S303 is Yes (namely, the message ID of the Msg. y1 is the same as the copy 12), the flow returns to step S301. Otherwise, the flow advances to step S304.

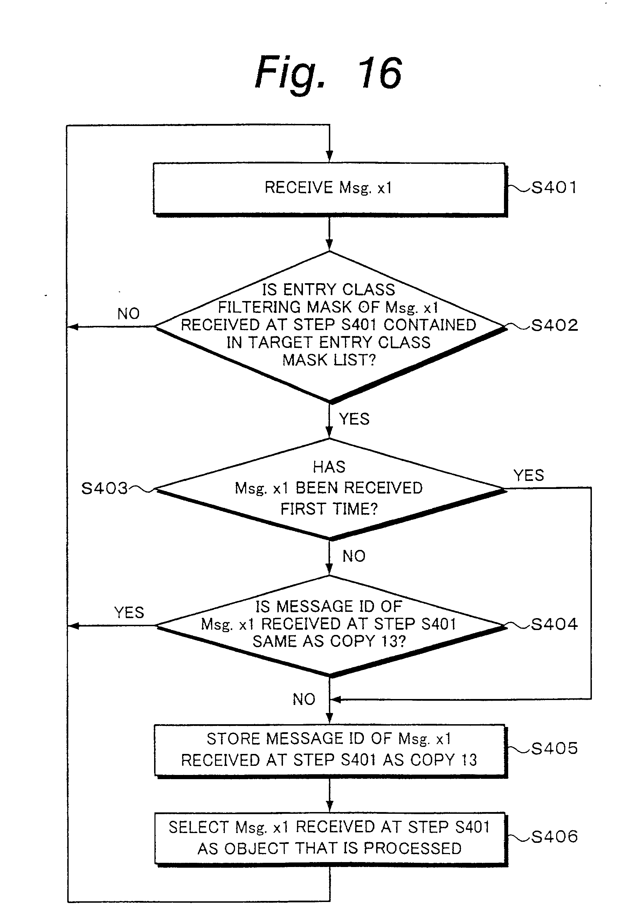

Next, with reference to Fig. 16, a process for selectively receiving leaf update information Msg. x1 containing entry class filtering masks of the target entry class mask list through the broadcast network 2 will be described. At step S401, leaf update information Msg. x1 is received. At step S402, it is determined whether or not an entry class filtering mask of the Msg. x1 received at step S401 is contained in the target entry class mask list.

When the determined result at step S402 is Yes (namely, an entry class filtering mask of the Msg. x1 is contained in the target entry class mask list), the flow advances to step S403. Otherwise, the flow advances to step S401. At step S403, it is determined whether or not the Msg. x1 has been received first time. When the determined result at step S403 is Yes (namely, the Msg. x1 has been received first time), the flow advances to step S405. Otherwise, the flow advances to step S404.

At step S405, the message ID of the Msg. x1 received at step S401 is stored as a copy 13. The copy 13 is stored to a record medium or a storage medium such as a memory or a hard disk of the receiving side replicater 17. Thereafter, the flow advances to step S406. At step S406, the Msg. x1 received at step S401 is selected as an object that is processed. hereafter, the flow returns to step S401.

On the other hand, at step S404, it is determined whether or not the message ID of the Msg. x1 received at step S401 is the same as the copy 13. When the determined result at step S404 is Yes (namely, the message ID of the Msg. x1 is the same as the copy 13), the flow returns to step S401. Otherwise, the flow advances to step S405.

According to embodiments of the present invention, under the condition of a combination of a class and an attribute of an entry that is updated, update information can be filtered. When contents of a directory are structured for inquiring genre information or fee information, only update information representing that fee information of the contents of a particular genre has changed can be extracted. Thus, a directory on the reception side can be updated corresponding to the extracted update information.

In addition, according to embodiments of the present invention, the contents of a directory tree managed by the receiving side directory can be affected by preference of the receiving side client. In other words, only a portion that is frequently accessed by the receiving side client can be stored and/or updated in the directory tree. Thus, the storage cost of the directory information on the receiving side can be reduced. In addition, an information storage medium can be effectively used. Moreover, the process efficiency against a search request of a directory client to the contents of the transmitting side directory can be remarkably improved.

According to embodiments of the present invention difference update information of a leaf entry that belongs to a scope designated as a set of a particular container entry in the directory hierarchy and entries as lower hierarchical entries thereof can be filtered. In addition, even if leaf entries that belong to a particular class are disposed in a plurality of scopes, update information of attributes of the class can be effectively filtered.

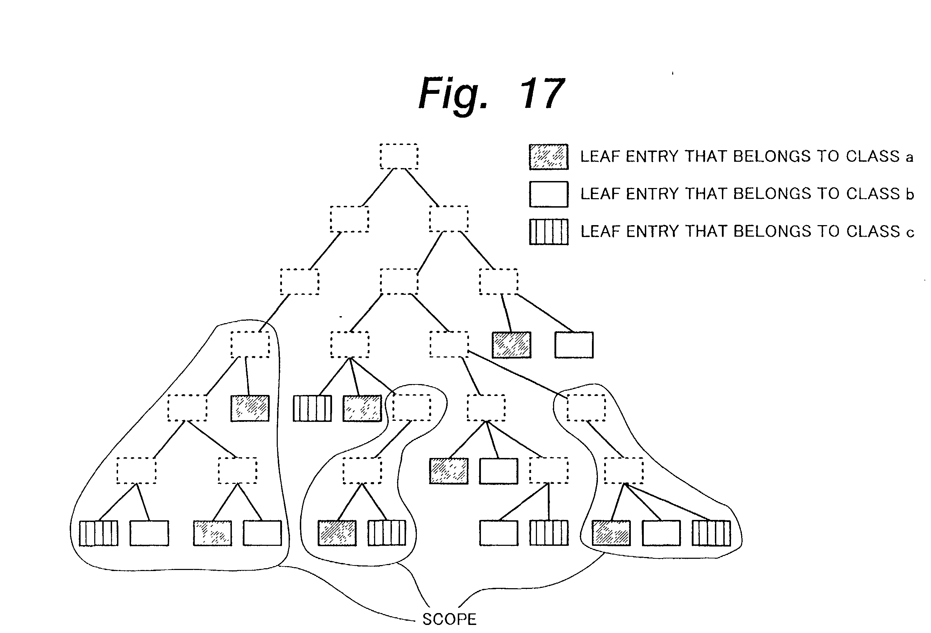

Thus, in a combination of a filtering process for a scope and a filtering process for a class, even if the hierarchy of the directory becomes large, difference update information can be effectively obtained. For example, in a tree structure of which leaf entries that belong to three types of classes a, b, and c co-exist as shown in Fig. 17, processes corresponding to various filtering conditions and combinations thereof can be performed. For example, (1) attribute update information of a leaf entry that belongs to the class b is obtained from leaf entries designated with information that represents a scope. As another example, (2) only attribute update information of a leaf entry that belongs to the class b is obtained regardless of a designated scope.

Although the present invention has been shown and described with respect to a best mode embodiment thereof, it should be understood by those skilled in the art that the foregoing and various other changes, omissions, and additions in the form and detail thereof may be made therein without departing from the scope of the present invention.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A transmitting apparatus for transmitting data, comprising:
means for allowing update notification information notifying a receiving side that data that is transmitted has been updated to contain information that identifies an updated data portion.

2. The transmitting apparatus as set forth in claim 1,
wherein the data has a directory tree structure, and
wherein the update notification information is left entry attribute value update information of the directory tree structure.

3. The transmitting apparatus as set forth in claim 2,
wherein the leaf entry attribute value update information contains information that identifies a class of a leaf entry of the directory tree structure.

4. The transmitting apparatus as set forth in claim 2,
wherein the leaf entry attribute value update information contains information that identifies an attribute of a leaf entry of the directory tree structure.

5. A receiving apparatus for receiving data, comprising:
means for receiving the data and update notification information notifying the receiving apparatus that the data has been updated and identifying a particular portion of an updated data portion corresponding to the received update notification information.

6. The receiving apparatus as set forth in claim 5,
wherein the data has a directory tree structure, and
wherein the update notification information is left entry attribute value update -information of the directory tree structure.

7. The receiving apparatus as set forth in claim 5, further comprising:
means for extracting a leaf entry that is updated corresponding to information that identifies a class of a leaf entry of the directory tree structure, the class identifying information being contained in the leaf entry attribute value update information.

8. The receiving apparatus as set forth in claim 5, further comprising:
means for extracting a leaf entry that is updated corresponding to information that identifies an attribute of a leaf entry of the directory tree structure, the class identifying information being contained in the leaf entry attribute value update information.

9. The receiving apparatus as set forth in claim 5, further comprising:
means for performing a process for extracting a leaf entry that is updated corresponding to a combination of information identifying a class of a leaf entry of the directory tree structure and information identifying an attribute thereof, the information identifying the class and the information identifying the attribute being contained in the leaf entry attribute value update information.

10. A transmitting - receiving system, comprising:
a transmitting unit for transmitting data; and
a receiving unit for receiving transmitted data,
wherein said transmitting unit transmits the data and update notification information notifying a receiving side that the data has been updated, the update notification information containing information identifying an updated data portion, and
wherein said receiving unit receives the data and the update notification information and identifies a particular portion of an updated data portion corresponding to the received update notification information.

11. The transmitting - receiving system as set forth in claim 10,
wherein a plurality of said transmitting units are disposed.

12. The transmitting - receiving system as set forth in claim 10,
wherein a plurality of said receiving units are disposed.

13. The transmitting - receiving system as set forth in claim 10, further comprising:
a broadcast network.

14. The transmitting - receiving system as set forth in claim 13,
wherein said transmitting unit transmits data to said broadcast network.

15. The transmitting - receiving system as set forth in claim 13,
wherein said receiving unit receives data from said broadcast network.

16. The transmitting - receiving system as set forth in claim 13,
wherein said broadcast network is a ground radio wave broadcast.

17. The transmitting - receiving system as set forth in claim 13,
wherein said broadcast network is a satellite radio wave broadcast.

18. The transmitting - receiving system as set forth in claim 13,
wherein said broadcast network is a ground network.

19. The transmitting - receiving system as set forth in claim 18,
wherein said broadcast network is the Internet.

20. A transmitting method for transmitting data, comprising the step of:
allowing update notification information notifying a receiving side that data that is transmitted has been updated to contain information that identifies an updated data portion.

21. A receiving method for receiving data, comprising the step of:
receiving the data and update notification information notifying the receiving apparatus that the data has been updated and identifying a particular portion of an updated data portion corresponding to the received update notification information.
